# EUROPÄISCHE PATENTSCHRIFT

(11) **EP 2 078 462 B1**
(45) Veröffentlichungstag und Bekanntmachung des Hinweises auf die Patenterteilung: **12.10.2011**
(21) Anmeldenummer: 08171527.8
(22) Anmeldetag: 12.12.2008
(51) Int. Cl.: A23L 1/22, C12G 3/06

(54) **Verwendung von alkoxylierten Flavonen zur Verstärkung des Geschmackseindruckes von Alkohol**
Application of alkoxylised flavones for reinforcing the taste impression of alcohol
Utilisation de flavones alkoxylés destinés au renforcement de l'arôme d'alcool

(30) Priorität: 21.12.2007 DE 102007055909
(43) Veröffentlichungstag der Anmeldung: 15.07.2009
(73) Patentinhaber: Symrise AG, 37603 Holzminden (DE)
(72) Erfinder: Krammer, Gerhard, 37603, Holzminden (DE); Kindel, Günter, 37671, Höxter (DE); Trautzsch, Stephan, 37603, Holzminden (DE); Schäfer, Uwe, 31868, Ottenstein (DE)
(74) Vertreter: Eisenführ, Speiser & Partner

(56) Entgegenhaltungen:
- EP-A- 0 605 261
- WO-A-2005/044778
- WO-A-2007/013811
- DE-A1- 10 222 883
- RU-C1- 2 018 523
- RU-C1- 2 091 471
- RU-C1- 2 093 556
- DUGO PAOLA ET AL: "On the genuineness of citrus essential oils. Part XLVI. Polymethoxylated flavones of the non-volatile residue of Italian sweet orange and Mandarin essential oils" FLAVOUR AND FRAGRANCE JOURNAL, Bd. 9, Nr. 3, 1994, Seiten 105-111, XP002523555 ISSN: 0882-5734
- MANTHEY J A ET AL: "Concentrations of hesperidin and other orange peel flavonoids in citrus processing byproducts" JOURNAL OF AGRICULTURAL AND FOOD CHEMISTRY, AMERICAN CHEMICAL SOCIETY, WASHINGTON, US, Bd. 44, Nr. 3, 1. Januar 1996 (1996-01-01), Seiten 811-814, XP002295553 ISSN: 0021-8561

## Beschreibung

Die Erfindung betrifft die Verwendung von bestimmten alkoxylierten Flavonen zur Verstärkung des sensorischen Eindruckes, insbesondere des Geschmackseindruckes, von Alkohol (Ethanol). Sie betrifft ferner flüssige Mischungen, umfassend Ethanol und bestimmte alkoxylierte Flavone, wobei letztere in einer Menge enthalten sind, dass der sensorische Eindruck, insbesondere der Geschmackseindruck, von Alkohol verstärkt wird. Die Erfindung betrifft außerdem ein Verfahren zum Erzeugen eines verstärkten sensorischen, insbesondere geschmacklichen, Ethanoleindruckes sowie ein Verfahren zur Herstellung eines Getränkes oder eines festen Lebensmittels mit einem verstärkten sensorischen, insbesondere geschmacklichen, Ethanoleindruck.

Alkohol (Ethanol) ist als geschmacksgebende Komponente oder als Komponente, die zum gesamten sensorischen Eindruck, insbesondere zum Gesamtgeschmackseindruck, beiträgt, in einer Vielzahl von Speisen, Süßwaren und insbesondere Getränken enthalten. Dabei ist es erwünscht, dass ein bestimmter sensorischer alkoholischer Eindruck, insbesondere Geschmackseindruck, unter Einsatz von möglichst wenig Ethanol erreicht wird. Gründe hiefür sind z. B. die negativen Nebenwirkungen von Alkohol sowie insbesondere bei Getränken auch steuerliche Aspekte, da in vielen Ländern Waren in Abhängigkeit von ihrem Alkoholgehalt besteuert werden.

Demzufolge war es Aufgabe der vorliegenden Erfindung Mittel anzugeben, mit deren Hilfe der typische sensorische, insbesondere der geschmackliche, Eindruck von Alkohol verstärkt werden kann. Bevorzugt sollten diese Mittel selbst geschmacklich neutral und lebensmittelverträglich sein.

Erfindungsgemäß wird diese Aufgabe gelöst durch die Verwendung einer Verbindung der Formel 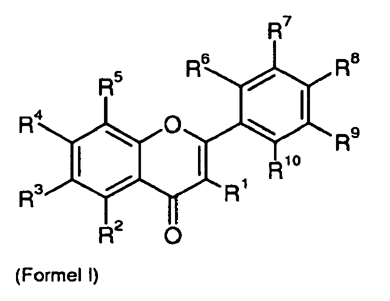 wobei
- R¹ bis R¹⁰: jeweils unabhängig von einander H, Methoxy- oder Ethoxy- und wenigstens einer der Reste R¹ bis R¹⁰ Methoxy- oder Ethoxy- bedeuten
zur Verstärkung des sensorischen Eindruckes, insbesondere des Geschmackseindruckes, von Alkohol.

Flavone sind wichtige Farbstoffe des Obstes. Gleichzeitig sind sie aufgrund ihres phenolischen Charakters gute Antioxidantien und können z. B. in Obst die L-Ascorbinsäure stabilisieren. Flavonen werden eine Reihe von physiologischen Eigenschaften zugeschrieben. Sie sind und waren Bestandteil umfangreicher Forschungsarbeiten. Dies gilt insbesondere auch für polymethoxylierte Flavone, die sich insbesondere in Zitrusfrüchten finden. Eine bekannte Quelle für solch polymethoxylierte Flavone ist Orangenschalenöl. Typische darin enthaltene polymethoxylierte Flavone sind 4',5,6,7-Tetramethoxyflavon (Tetra-O-methylscutellarein, vgl. Formel V weiter unten), 4',5,6,7,8-Pentamethoxyflavon (Tangeretin, vgl. Formel III weiter unten), 3',4',5,6,7-Pentamethoxyflavon (Sinensetin, vgl. Formel VI weiter unten), 3',4',5,6,7,8-Hexamethoxyflavon (Nobiletin, vgl. Formel IV weiter unten), 3,3',4',5,6,7,8-Heptamethoxyflavon (Hepta-3, vgl. Formel II weiter unten). Noch ein weiterer wesentlicher Bestandteil ist 3,3',4',5,6,7 -Hexamethoxyflavon (Hexamethoxyquercetagetin).

Die EP 0 605 261 offenbart einen verstärkenden Effekt bestimmter Flavone auf bestimmten Geschmacksrichtungen. Ein Teil der in dem genannten Dokument beschriebenen Flavone fällt auch unter die allgemeine Formel I. Es gibt aber keinerlei Hinweis auf die Fähigkeit der dort beschriebenen Flavone, den sensorischen Eindruck, insbesondere den Geschmackseindruck, von Alkohol zu verstärken. Dieser überraschende Effekt ist wesentlicher Bestandteil der hier beschriebenen Erfindung.

Dabei ist im Rahmen der vorliegenden Anmeldung der Begriff "Alkohol" mit dem Begriff "Ethanol" gleichzusetzen, sofern nichts anderes angegeben ist.

Unter Verstärkung des Geschmackseindruckes von Alkohol ist im Rahmen der vorliegenden Anmeldung zu verstehen, dass reproduzierbar von einem Testpanel festgestellt werden kann, dass eine gegebene Alkoholkonzentration in Mischung mit einer alkoholgeschmackverstärkenden Verbindung (einer Verbindung mit der allgemeinen Formel I) einen Geschmackseindruck hinsichtlich des typischen Ethanolgeschmackes hervorruft, der (scheinbar) einer höheren Alkoholkonzentration entspricht.

Bevorzugt bei der erfindungsgemäßen Verwendung ist, dass eine Verbindung der allgemeinen Formel I eingesetzt wird, bei der R⁶ und R¹⁰ gleich H bedeutet und/oder die Reste R¹ bis R¹⁰ Methoxy oder H bedeuten und/oder wenigstens 2, 3, 4, 5, 6, 7 oder 8 der Reste R¹ bis R¹⁰ Methoxy, darstellen. Bevorzugt sind Verbindungen der Formel I, bei denen R⁶ und R¹⁰ gleich H sind und wenigstens 4, 5, 6 oder 7 der Reste R¹ bis R¹⁰ Methoxy bedeuten.

Erfindungsgemäß bevorzugt ist eine erfindungsgemäße Verwendung, wobei wenigstens eine Verbindung der Formel I ausgewählt ist aus der Gruppe bestehend aus Verbindungen der Formeln II bis VI:

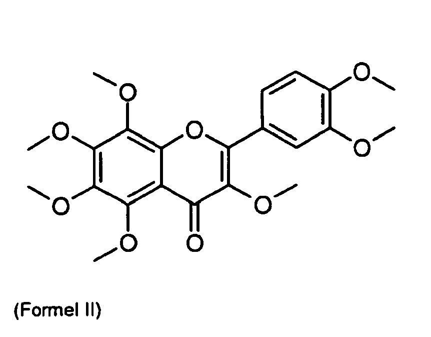

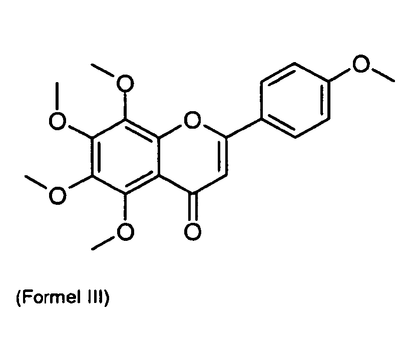

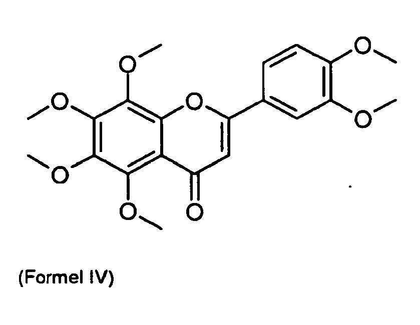

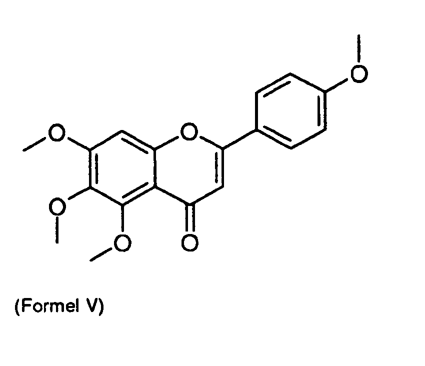

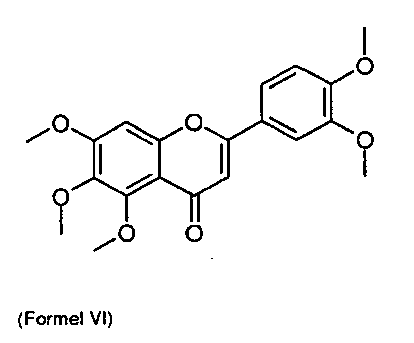

Dabei hat sich gezeigt, dass sich für die erfindungsgemäße Verwendung (Gesamt-) Mengen der Verbindung der Formel I von 1 bis 20 ppm, bevorzugt 1 bis 15 ppm, weiter bevorzugt 2 bis 10 ppm, noch weiter bevorzugt 5 bis 10 ppm, bezogen auf die resultierende Gesamtmischung (inklusive weiterer Bestandteile) besonders eignen, da hier der alkoholverstärkende Effekt sehr deutlich auftritt.

Darüber hinaus haben sich Ethanolgehalte bezogen auf das Volumen der resultierenden Gesamtmischung von 0,5 bis 50 Vol-%, bevorzugt 1,5 bis 40 Vol-%, weiter bevorzugt 2,5 bis 30 Vol-%, noch weiter bevorzugt 2,5 bis 20 Vol-%, als besonders geeignete Alkoholanteile erwiesen.

Dabei hat sich als ganz besonders bevorzugt erfindungsgemäß zu verwendende Verbindung 3,3',4',5,6,7,8-Heptamethoxyflavon (Formel II) erwiesen, da diese den stärksten alkoholverstärkenden Effekt der Verbindungen der Formel (I) zeigt. Um den erfindungsgemäßen Effekt in besonderem Maße zu erzielen, sollte der Gehalt an 3,3',4',5,6,7,8-Heptamethoxyflavon (Formel II) vorzugsweise zumindest 30 Gew.-%, weiter bevorzugt zumindest 40 Gew.-%, noch weiter bevorzugt zumindest 50 Gew.-%, am meisten bevorzugt zumindest 60 Gew.-%, betragen, jeweils bezogen auf das Gesamtgewicht der Verbindungen der Formel I.

### Low alcoholic drinks (LADs)

Bei "Low alcoholic drinks" handelt es sich um Getränke mit einem Alkoholgehalt von 0,5 bis 15 Vol-%, dieses können im Speziellen Bier, Wein Biermischgetränke, Alkopops, Instant Alkopops und Weinmischgetränke sein, die als Fertiggetränk oder Instant-Getränkezubereitung zum Genuss angeboten werden.

LADs umfassen unter anderem Produkte, die rein durch Fermentation von Pflanzen oder bestimmten Pflanzenteilen gewonnen wurden, wie z.B. Wein oder Bier. Der Alkohol in LADs kann auch durch direkten Zusatz von Alkohol zu dem Produkt stammen. LADs können ferner Mischprodukte aus durch Fermentation gewonnenem alkoholischem Teil, wie z.B. Wein oder Bier, und einem nichtalkoholischem Anteil wie z.B. Limonaden sein. Der Limonadenanteil besteht üblicherweise aus Süßungsmitteln, Geschmackstoffen, Säuerungsmitteln, Farbstoffen und Vitaminzusätzen in unterschiedlichen Gewichtsanteilen. Als Süßungsmittel werden Fruktose, Glukose, Saccharose, für kalorienarme Getränke auch künstliche Süßungsmittel wie Acesulfam, Aspartam, Saccharin oder Cyclamat oder Hesperetin (Süßverstärker) als einzelne Substanzen oder in Kombination verwandt. Die Geschmack gebenden Bestandteile bestehen in der Regel aus Fruchtsaftanteilen, ätherischen Ölen, Rekombinaten, Extrakten aus Drogen oder einzelnen Aroma- oder Geschmackstoffen. Bei den zugesetzten Säuerungsmitteln handelt es sich regelmäßig um Zitronensäure, Phosphorsäure, Bernsteinsäure und Fumarsäure oder andere zugelassene Säuerungsmittel. Teilweise werden LADs auch mit Farbstoffen wie z.B. Karamell, Zuckercouleur, Pflanzenextrakten oder anderen zugelassenen Farbstoffen versetzt. Um den physiologischen Wert eines Getränkes zu steigern können auch Vitamine, beispielsweise Vitamin A, B, C oder E, zugegeben werden.

Geschmacklich und vom erwünschten alkoholverstärkenden Effekt her besonders zu bevorzugen sind die Kombinationen von 0,5 bis 15 Vol-% Alkohol, bevorzugt mit 2,5 bis 8 Vol-% Alkohol, weiter bevorzugt mit 2,5 bis 5 Vol-% Alkohol, mit Verbindungen der Formel I in einer Gesamtmenge (Dosierung) von 2 bis 20 ppm, bevorzugt 2 bis 15 ppm. Je nach Getränkeart und deren Alkoholgehalt weiter bevorzugt sind Verbindungen der Formel I, insbesondere der Formeln II bis VI, in einer Gesamtmenge von 2 bis 5 ppm bzw. von 5 bis 15 ppm.

### Medium alcoholic drinks (MADs)

Bei Medium alcoholic drinks handelt es sich um Getränke mit einem Alkoholgehalt zwischen 15 bis 30 Vol-%. MADs können im Speziellen Liköre sein, die beispielsweise durch Mazeration von Pflanzen oder Pflanzenteilen mit anschließender Filtration oder Destillation gewonnen werden können. Auch Spirituosenmischgetränke, Obstweine, Likörweine, sowie andere Getränke, deren Alkohol durch Fermentation und anschließender Destillation gewonnen wurde, werden zu den MADs gezählt.

MADs können ferner Mischprodukte von alkoholischen Getränken, wie z.B. Obstweinen oder Kräuterlikören, sein, denen abrundende Stoffe zugegeben wurden.

Als abrundende Stoffe werden üblicherweise Süßungsmittel, Aromastoffe, Geschmackstoffe, Säuerungsmittel, Farbstoffe in unterschiedlichen Gewichtsanteilen verwandt. Als Süßungsmittel werden Fruktose, Glukose, Saccharose aber auch künstliche Süßungsmittel wie Acesulfam, Aspartam, Saccharin, Cyclamat oder Hesperetin als einzelne Substanzen oder in Kombination benutzt. Aroma- und Geschmacksstoffe können ätherische Öle, Extrakte aus Drogen oder Einzelstoffe sein. Bei den zugesetzten Säuerungsmitteln handelt es sich meist um Zitronensäure, Phosphorsäure, Bernsteinsäure und Fumarsäure oder andere zugelassene Säuerungsmittel. Teilweise werden MADs auch mit Farbstoffen wie z.B. Karamell, Zuckercouleur, Pflanzenextrakten oder anderen zugelassenen Farbstoffen versetzt.

Bei einem Alkoholgehalt zwischen 15 bis 30 Vol-%, bevorzugt 15 bis 20 Vol-% (wie er z. B. in handelsüblichen Likören zu finden ist), wird vorzugsweise eine Dosierung 2 bis 10 ppm, weiter bevorzugt von 4 bis 6 ppm gewählt. In dieser Dosierung von Verbindungen der Formel I, insbesondere der Formeln II bis VI wird ein bei diesen Getränken vorteilhaft verstärkter Ethanol-Geschmackseindruck erreicht.

### High alcoholic drinks (HADs)

Bei high alcoholic drinks handelt es sich um Getränke mit einem Alkoholgehalt von größer als 30 Vol-%; dieses können zum Beispiel Wodka, Rum, Whisk(e)y, Tequila, Obstbrände oder Kornbrände sein. Vorzugsweise weisen sie einen Alkoholgehalt im Bereich von 30 bis 50 Vol.% auf.

HADs können abrundende Stoffe enthalten. Als abrundende Stoffe werden üblicherweise Süßungsmittel, Aromastoffe, Geschmackstoffe, Säuerungsmittel, Farbstoffe in unterschiedlichen Gewichtsanteilen verwandt. Als Süßungsmittel werden Fruktose, Glukose, Saccharose, aber auch künstliche Süßungsmittel wie Acesulfam, Aspartam, Saccharin, Cyclamat oder Hesperetin als einzelne Substanzen oder in Kombination benutzt. Aroma- und Geschmacksstoffe können ätherische Öle, Extrakte aus Drogen oder Einzelstoffe sein. Bei den zugesetzten Säuerungsmitteln handelt es zumeist um Zitronensäure, Phosphorsäure, Bernsteinsäure und Fumarsäure oder andere zugelassene Säuerungsmittel. Teilweise werden HADs auch mit Farbstoffen wie z.B. Karamell, Zuckercouleur, Pflanzenextrakten oder anderen zugelassenen Farbstoffen versetzt.

Bei Alkoholgehalten von 30 oder mehr Vol-%, insbesondere von 30 bis 50 Vol-% Alkohol (wie er z. B. in handelsüblichen Spirituosen zu finden ist), liegt der Anteil von Verbindungen der Formel I vorzugsweise im Bereich von 1 bis 5 ppm, weiter bevorzugt im Bereich von 1 bis 2 ppm. Bei diesen Dosierungen erreichen die Verbindungen der Formel I, insbesondere der Formeln II bis VI, eine besonders vorteilhafte Verstärkung des Ethanol-Geschmackseindrucks.

Teil der Erfindung ist auch eine flüssige Mischung, umfassend Ethanol und eine Verbindung der Formel I oder ein Gemisch von Verbindungen der Formel I: 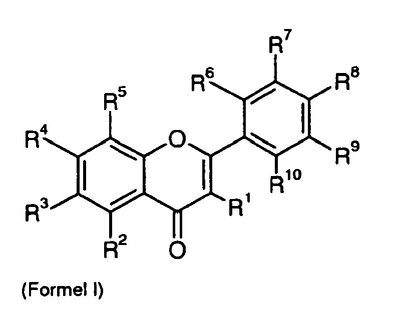 wobei
- R¹ bis R¹⁰: jeweils unabhängig von einander H, Methoxy- oder Ethoxy- und wenigstens einer der Reste R¹ bis R¹⁰ Methoxy- oder Ethoxy- bedeuten
und wobei
der Ethanolgehalt bezogen auf das Volumen der flüssigen Mischung 0,5 bis 50 Vol-% und die Gesamtmenge Verbindungen der Formel I bezogen auf die flüssige Mischung 1 bis 20 ppm, bevorzugt 1 bis 15 ppm, beträgt
mit der Maßgabe, dass die Mischung keinen Orangensaft umfasst.

Weiterhin bevorzugt ist, dass die erfindungsgemäße flüssige Mischung keinen Saft aus Zitrusfrüchten umfasst. Dabei umfasst der Begriff "Orangensaft" und der Begriff "Saft aus Zitrusfrüchten" im Wesentlichen aus den entsprechenden Früchten stammende (und gegebenenfalls lediglich verdünnte) Säfte sowie Säfte aus Saftkonzentrationen der jeweils betreffenden Früchte.

Bevorzugt ist eine erfindungsgemäße flüssige Mischung, mit den oben beschriebenen bevorzugten Varianten der Verbindung der Formel I, insbesondere wobei die Verbindungen der Formel I im Wesentlichen eine oder mehrere Verbindungen der Formeln II bis VI 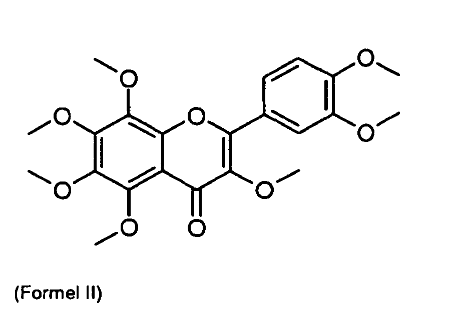 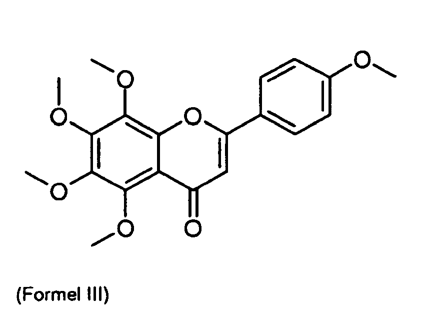 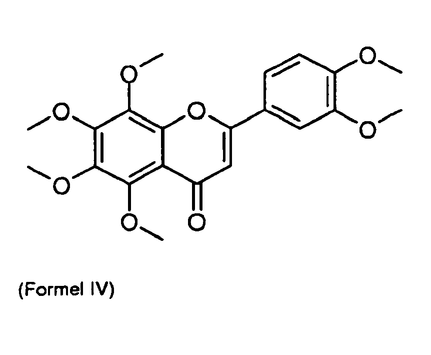 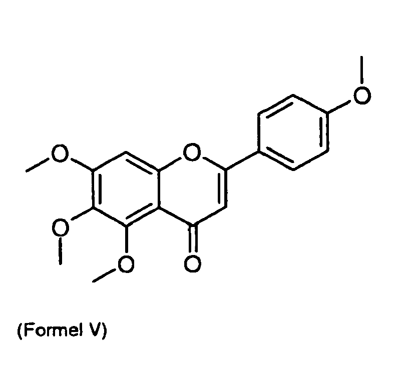 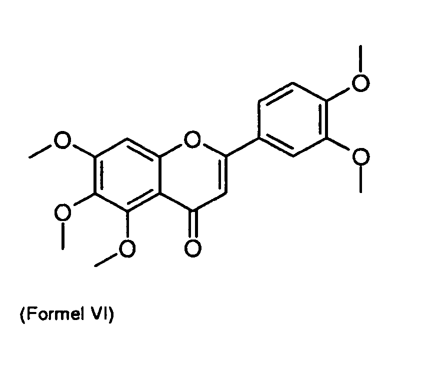 sind, wobei ganz besonders Verbindungen der Formel II bevorzugt sind.

Bevorzugte erfindungsgemäße flüssige Mischungen sind Mischungen, die ein zum Konsum durch den Menschen bestimmtes Getränk sind.

Bevorzugte Getränke sind dabei Bier, Leichtbier, Biermischgetränke, Met, Schaumweine, Weine, Weinmischgetränke, Spirituosen wie Alkopops, Brände, Cocktails, Longdrinks, Liköre und Likörweine. Aufgrund der vorliegenden Erfindung ist es möglich, in sämtlichen alkoholhaltigen Getränken bei erfindungsgemäßer Zudosierung der Verbindungen der Formel I den (jeweils üblichen) Alkoholgehalt zu verringern, ohne dass der als üblich empfundene Gesamtgeschmackseindruck (insbesondere unter Einbeziehung des Alkoholgeschmackseindruckes) verändert wird.

Im Sinne dieser Anmeldung sind zum Konsum durch den Menschen bestimmte Getränke lediglich solche, die nach deutschem Lebensmittelrecht an den Endverbraucher verkauft werden dürfen. Insbesondere verdorbene Getränke fallen nicht unter die vorgenannte Definition.

Bestandteil der Erfindung sind auch Süßwaren, umfassend eine erfindungsgemäße flüssige Mischung. Üblicherweise handelt es sich bei den erfindungsgemäßen Süßwaren um gefüllte Produkte wie z. B. Pralinen, die mit Likör, Weinbrand oder Ähnlichem gefüllt sind. Bei den erfindungsgemäßen Süßwaren kann es sich aber auch um Bonbons handeln.

Bestandteil der Erfindung ist auch ein Verfahren zum Erzeugen eines verstärkten geschmacklichen Ethanoleindruckes, umfassend die Schritte
a) Bereitstellen von Ethanol oder einer ethanolhaltigen Mischung,
b) Hinzufügen einer Verbindung der Formel I oder einer Mischung von Verbindungen der Formel I in einer Menge, so dass der geschmackliche Eindruck von Ethanol verstärkt wird,
mit der Maßgabe, dass im Schritt b) kein Orangensaft, bevorzugt kein Saft aus Zitrusfrüchten eingesetzt wird.

Bestandteil der Erfindung ist auch ein Verfahren zur Herstellung eines Getränkes oder eines festen Lebensmittels, umfassend ein erfindungsgemäßes Verfahren zum Erzeugen eines verstärkten geschmacklichen Ethanoleindruckes. Prinzipiell lässt sich die erfindungsgemäße Verwendung bei der Herstellung allerdings mit einer geschmacklichen Alkoholkomponente einsetzen. Dies gilt somit auch für Backwaren oder andere Lebensmittel, die keine flüssigen Bestandteile mehr umfassen.

Bevorzugte erfindungsgemäß einzusetzende Flavone der allgemeinen Formel I lassen sich dabei z. B. aus kommerziell erhältlichen Flavonmischungen gewinnen. Besonders bevorzugt sind in solchem Zusammenhang kommerzielle Polymethoxyflavon-Mischungen, die aus Orangenschalenöl gewonnen wurden. So lassen sich z. B. kommerziell erhältliche Qualitäten an Polymethyoxyflavonen (PMF) mit 60, 80 oder mehr Gew.-% Flavongehalt aufreinigen, wobei insbesondere Verbindungen der Formeln II bis VI gewonnen werden können.

Die nachfolgenden Beispiele dienen dazu, die vorliegende Erfindung näher zu charakterisieren, nicht aber dazu, sie einzuschränken. Sofern nicht anders angegeben, beziehen sich alle Angaben auf das Gewicht.

### Beispiel 1: Anreicherung von Polymethoxyflavonen (PMF)

Ausgehend von einer kommerziellen PMF-Qualität mit 60 Gew.-% Flavongehalt nach HPLC, die aus *Citrus sinensis* (Orangen) gewonnen wurde, wurde durch extraktive Anreicherung die Hauptkomponente 3,3',4',5,6,7,8-Heptamethoxyflavon (HMF, entsprechend Formel II) in hochreiner Form gewonnen.

Es bestand im Ausgangsmaterial ein Flavongehalt von HMF von 90 %, Tangeretin 4 %, Nobiletin 2 % und Tetra-O-methylscutellarein 1 %, bezogen auf den Gesamtflavonanteil. Weitere Flavone waren in kleineren Mengen ebenfalls vorhanden. Das Mengenverhältnis der Flavone im Flavonanteil der benutzten PMF-Qualität wurde per Gaschromatographie (GC) bestimmt.

### Erster Anreicherungsschritt:

100 ml Ethanol/Wasser-Gemisch 1 : 1 wurden im Wasserbad unter Rühren auf 80 °C erwärmt und 12 g des vorbeschriebenen Ausgangsmaterials (PMF 60) zugegeben und nachfolgend 15 Minuten gerührt. Es resultierte eine dunkelbraungefärbte, trübe Lösung. Enthaltene ungelöste Partikel wurden mit Hilfe einer Glasfritte abgefiltert. Nachfolgend wurde das Filtrat abgekühlt, bei Raumtemperatur wurden einige Kristalle des Ausgangsproduktes zum Animpfen zugegeben und das Filtrat für 24 Stunden bei 5 °C gelagert.

Anschließend wurden auskristallisierte Flavone mit einer Glasfritte abgesaugt, zweimal mit je 20 ml Ethanol gewaschen und anschließend im Trockenschrank bei 50 °C für 30 Minuten getrocknet. Das resultierende Flavongemisch bestand laut HPLC zu 87 Gew.-% aus HMF (HMF87).

### Zweiter Anreicherungsschritt (Gewinnung von HMF in hochreiner Form):

Die aus dem ersten Anreicherungsschritt gewonnene Qualität HMF87 wurde durch zweifache Umkristallisation mit Methanol/Wasser-Gemisch im Verhältnis 65 : 35 weiter angereichert. Dadurch konnte HMF in hochreiner Form (HPLC - Reinheit ≥ 99 Gew.-%) (HMF99) gewonnen werden.

### Beispiel 2: Verkosten von gemischten Ethanol und Heptamethoxyflavon (HMF)-haltigen Mischungen

Als Versuchsmatrix diente eine 5 %-ige Saccharoselösung mit Alkoholgehalten von 4 bzw. 10 Vol-%. Zu jeweils beiden Saccharoselösungen wurden
a) nichts,
b) 2 ppm HMF87 aus Beispiel 1,
c) 2 ppm HMF99 aus Beispiel 1,
d) 5 ppm HMF87 aus Beispiel 1 und
e) 5 ppm HMF99 aus Beispiel 1
hinzugefügt.

Sämtliche Lösungen wurden von einem Expertenpanel aus jeweils fünf Experten verkostet. Dabei wurde übereinstimmend eine hochsignifikante Verstärkung des Alkoholeindruckes in den Proben festgestellt, die HMF enthielten, jeweils verglichen mit den Proben ohne HMF und mit gleichem Alkoholgehalt.

Ein Unterschied zwischen den Fraktionen HMF87 und HMF99 konnte nicht als signifikant festgestellt werden.

### Beispiele 3 - 6: Anwendungsbeispiele

Von einem Konsumentenpanel wurden die zu untersuchenden Getränke verkostet, wobei insbesondere der abweichende alkoholische Geschmack sowie eventuell weitere zusätzliche Geschmacksnoten im Vergleich zu einer Referenzprobe bewertet werden sollten.

Als Referenz diente in jedem Fall das jeweilige Basisgetränk ohne Zugabe des PMF-Gemisches PMF84 (aus *Citrus sinensis* (Orangen)), das folgende Zusammensetzung an PMFs der Formel I aufwies (HPLC-Gehalte):
51,9 Gew.-% an 3,5,6,7,8,3',4'-Heptamethoxyflavon (Formel II)
27,9 Gew.-% an Nobiletin (Formel IV)
2,7 Gew.-% an Tangeretin (Formel III)
1,5 Gew.-% an Sinensetin (Formel VI)

In der jeweiligen Testreihe der Beispiele 3 bis 6 wurden die folgenden Proben verkostet, wobei der Referenzprobe jeweils folgende Anteile an PMF84 zugesetzt wurden:
a) 0 ppm (= Referenzprobe),
b) 1 ppm PMF84,
c) 2 ppm PMF84,
d) 5 ppm PMF84,
e) 10 ppm PMF84,
f) 20 ppm PMF84.

Dem Konsumentenpanel wurde eine Referenzprobe gereicht und 5 chiffrierte Proben (entsprechend b) bis f)), wobei die chiffrierten Proben geschmacklich gegen die Referenzprobe verkostet werden sollten. Die Intensität des alkoholischen Geschmacks der jeweiligen Referenzprobe wurde mit "null" definiert, die chiffrierten Proben wurden auf einer Skala von 0 (= kein Unterschied zur Referenzprobe) bis 5 (deutlich stärker als Referenzprobe) eingestuft.

### Beispiel 3: LAD mit 2,5 Vol-% Alkohol

Einem Konsumentenpanel aus 14 bzw. 15 Teilnehmern wurde ein Getränk, bestehend aus 80 g/l Zucker, 2 g/l Zitronensäure, 26 ml/l Alkohol 96 Vol-% und Wasser unter Zugabe verschiedener Mengen an PMF84 zur geschmacklichen Beurteilung gereicht. Als Referenz diente das Getränk ohne Zugabe von PMF84.

Beurteilung des Effektes der Verstärkung des alkoholischen Geschmacks im Vergleich zur Referenzprobe.

| Beschreibung | **Zugabe an PMF84** | | | | | |
|---|---|---|---|---|---|---|
| | 1 ppm | 2 ppm | 5 ppm | 10 ppm | 20 ppm | |
| kein | 7 | 5 | 3 | 2 | 1 | Anzahl Probanden |
| leichter | 3 | 3 | 0 | 0 | 1 | |
| leicht bis mittel | 4 | 6 | 8 | 7 | 6 | |
| mittel bis stark | 0 | 0 | 3 | 6 | 7 | |

### Zusammenfassung der Verkostungsergebnisse:

Die optimale Verstärkung des alkoholischen Geschmacks in diesem Anwendungsbeispiel liegt im Bereich von 5 - 10 ppm. Bei einer Zugabe von 1 - 2 ppm wird nur von einem kleinen Teil der Probanden eine verstärkte alkoholische Wahrnehmung angegeben. Bei einer Dosierung von 20 ppm PMF84 wird von den Testeilnehmern eine scharfe, stechende Note, aber auch eine deutlich verstärkte Wahrnehmung des Alkoholgeschmacks beschrieben.

### Beispiel 4: Bier mit 5 Vol.% Alkohol

Einem Konsumentenpanel aus 14 Teilnehmern wurde ein Getränk, bestehend aus bestehend aus 900 ml/l alkoholfreiem Bier, 52 ml/l Alkohol 96 Vol-%, carbonisiertem Wasser unter Zugabe verschiedener Mengen an PMF84 zur geschmacklichen Beurteilung gereicht. Als Referenz diente das Getränk ohne Zugabe von PMF84.

Beurteilung des Effektes der Verstärkung des alkoholischen Geschmacks im Vergleich zur Referenzprobe.

| Beschreibung | **Zugabe an PMF84** | | | | | |
|---|---|---|---|---|---|---|
| | 1 ppm | 2 ppm | 5 ppm | 10 ppm | 20 ppm | |
| kein | 6 | 6 | 5 | 4 | 3 | Anzahl Probanden |
| leichter | 6 | 3 | 3 | 4 | 4 | |
| leicht bis mittel | 2 | 4 | 4 | 3 | 5 | |
| mittel bis stark | 0 | 1 | 2 | 3 | 2 | |

### Zusammenfassung der Verkostungsergebnisse:

Die optimale Verstärkung des alkoholischen Geschmacks in diesem Anwendungsbeispiel liegt im Bereich von 5 - 20 ppm. Bei einer Zugabe von 1 - 5 ppm wird nur von einem kleinen Teil der Probanden eine verstärkte alkoholische Wahrnehmung angegeben. Die Probanden beschrieben weiterhin eine Verstärkung des prickelnden erfrischenden Geschmacks sowie eine leichte Bitterkeit und eine Verstärkung der Hopfennote.

### Beispiel 5: Likör mit 20 Vol-% Alkohol

Einem Konsumentenpanel aus 14 Teilnehmern wurde ein Getränk, bestehend aus bestehend aus bestehend aus 190 g/l Zucker, 207 ml/l Alkohol 96 % Vol. und Wasser unter Zugabe verschiedener Mengen an PMF84 zur geschmacklichen Beurteilung gereicht. Als Referenz diente das Getränk ohne Zugabe von PMF84.

Beurteilung des Effektes der Verstärkung des alkoholischen Geschmacks im Vergleich zur Referenzprobe.

| Beschreibung | **Zugabe an PMF84** | | | | | |
|---|---|---|---|---|---|---|
| | 1 ppm | 2 ppm | 5 ppm | 10 ppm | 20 ppm | |
| kein | 5 | 1 | 0 | 1 | 1 | Anzahl Probanden |
| leichter | 7 | 7 | 0 | 2 | 4 | |
| leicht bis mittel | 1 | 5 | 11 | 9 | 8 | |
| mittel bis stark | 1 | 1 | 3 | 2 | 1 | |

### Zusammenfassung der Verkostungsergebnisse:

Die optimale Verstärkung des alkoholischen Geschmacks in diesem Anwendungsbeispiel liegt im Bereich von 5 ppm. Bei einer Zugabe von 1 - 2 ppm wird nur von einem kleineren Teil der Probanden eine verstärkte alkoholische Wahrnehmung angegeben. Zusätzlich wird das Getränk ab einer Zugabe von 5 ppm als süßer, aber auch leicht bitterer beschrieben.

### Beispiel 6: Wodka mit 37,5 Vol-% Alkohol

Einem Konsumentenpanel aus 14 Teilnehmern wurde ein Getränk, bestehend aus bestehend aus bestehend Wodka (Marke Vodka Smirnoff) 37,5 % Vol. unter Zugabe verschiedener Mengen an PMF84 zur geschmacklichen Beurteilung gereicht. Als Referenz diente das Getränk ohne Zugabe von PMF84.

Beurteilung des Effektes der Verstärkung des alkoholischen Geschmacks im Vergleich zur Referenzprobe.

| Beschreibung | **Zugabe an PMF84** | | | | | |
|---|---|---|---|---|---|---|
| | 1 ppm | 2 ppm | 5 ppm | 10 ppm | 20 ppm | |
| kein | 5 | 2 | 1 | 2 | 2 | Anzahl Probanden |
| leichter | 4 | 1 | 0 | 0 | 0 | |
| leicht bis mittel | 4 | 9 | 11 | 9 | 7 | |
| mittel bis stark | 1 | 3 | 2 | 3 | 5 | |

### Zusammenfassung der Verkostungsergebnisse:

Die optimale Verstärkung des alkoholischen Geschmacks in diesem Anwendungsbeispiel liegt im Bereich von 2 - 5 ppm. Bei einer Zugabe von höheren Mengen PMF wird von den Probanden ein brennender, stechender Geschmack angegeben.

## Patentansprüche

1. Verwendung einer Verbindung der Formel I oder eines Gemisches von Verbindungen der Formel I: 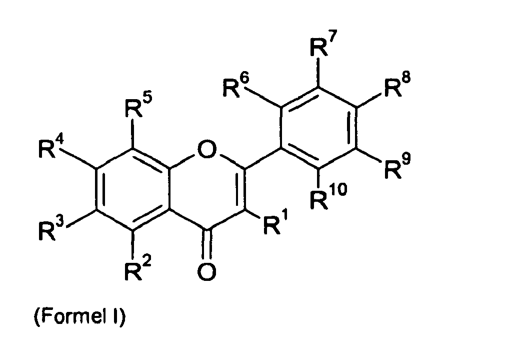 wobei
R¹ bis R¹⁰ jeweils unabhängig von einander H, Methoxy- oder Ethoxy- und wenigstens einer der Reste R¹ bis R¹⁰ Methoxy- oder Ethoxy- bedeuten
zur Verstärkung des sensorischen Eindruckes, insbesondere des Geschmackseindruckes, von Alkohol.

2. Verwendung nach Anspruch 1, wobei wenigstens eine Verbindung der Formel I ausgewählt ist aus der Gruppe bestehend aus Verbindungen der Formeln II bis VI:

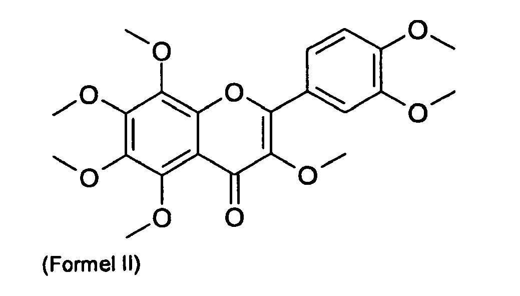

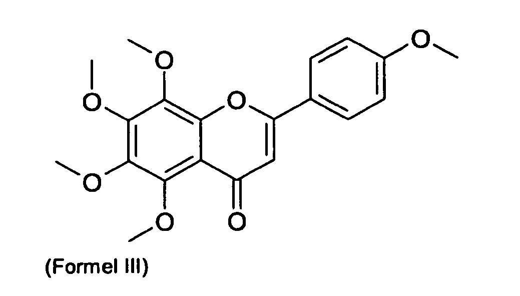

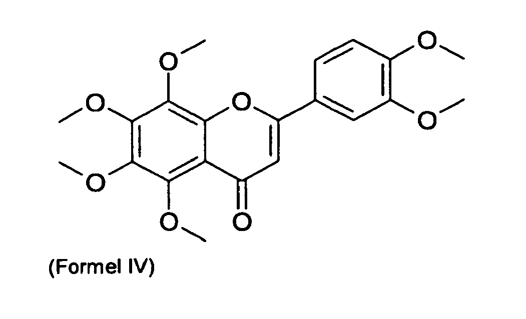

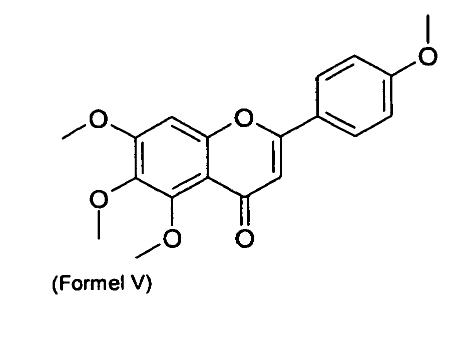

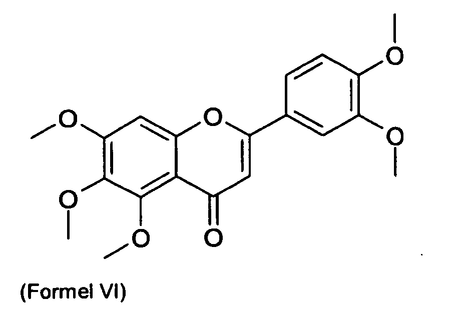

3. Flüssige Mischung, umfassend Ethanol und eine Verbindung der Formel I oder ein Gemisch von Verbindungen der Formel I: 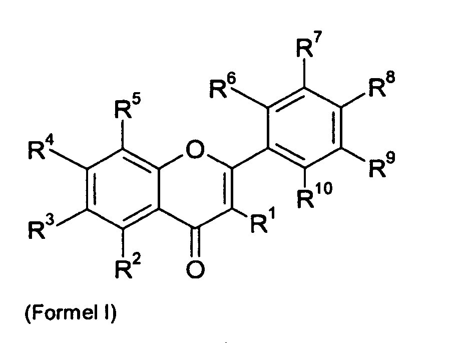 wobei
R¹ bis R¹⁰ jeweils unabhängig von einander H, Methoxy- oder Ethoxy- und wenigstens einer der Reste R¹ bis R¹⁰ Methoxy- oder Ethoxy- bedeuten
und wobei
der Ethanolgehalt bezogen auf das Volumen der flüssigen Mischung 0,1 bis 50 Vol-% und die Gesamtmenge Verbindungen der Formel I bezogen auf die flüssige Mischung 1 bis 20 ppm beträgt
mit der Maßgabe, dass die Mischung keinen Orangensaft umfasst.

4. Flüssige Mischung nach Anspruch 3, wobei die Mischung keinen Saft aus Zitrusfrüchten umfasst.

5. Flüssige Mischung nach einem der Ansprüche 3 oder 4, wobei die Verbindungen der Formel I im Wesentlichen eine oder mehrere der Verbindungen der Formeln II bis VI 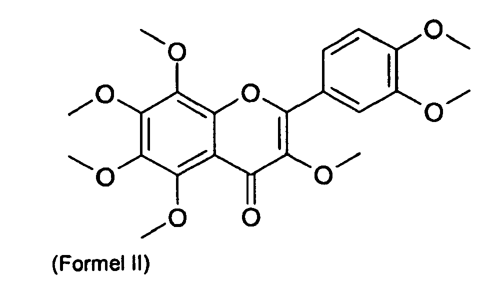 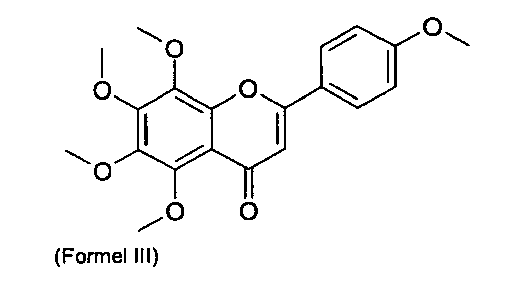 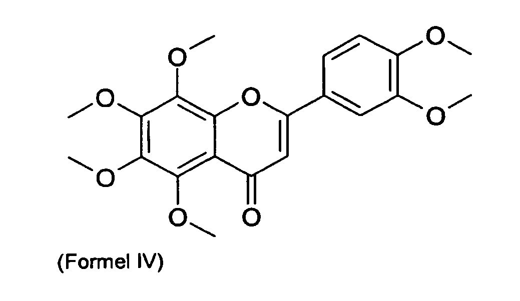 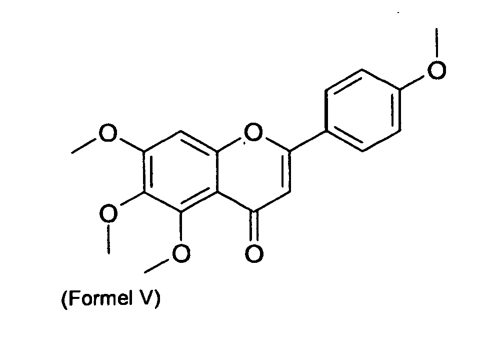 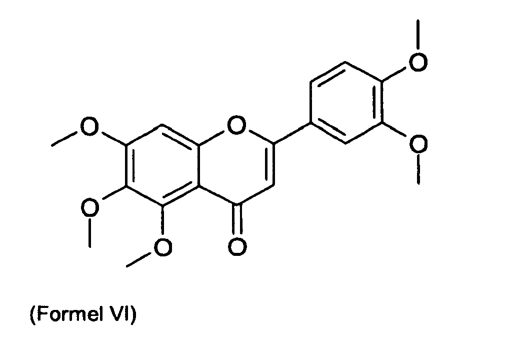 sind.

6. Flüssige Mischung nach einem der Ansprüche 3 bis 5, wobei die Mischung ein zum Konsum durch den Menschen bestimmtes Getränk ist

7. Süßware, umfassend eine flüssige Mischung nach einem der Ansprüche 3 bis 5.

8. Verfahren zum Erzeugen eines verstärkten geschmacklichen Ethanoleindruckes, umfassend die Schritte:
a) Bereitstellen von Ethanol oder einer ethanolhaltigen Mischung,
b) Hinzufügen einer Verbindung der Formel I oder einer Mischung von Verbindungen der Formel I in einer Menge, so dass der geschmackliche Eindruck von Ethanol verstärkt wird,
mit der Maßgabe, dass im Schritt b) kein Orangensaft, bevorzugt kein Saft aus Zitrusfrüchten eingesetzt wird.

9. Verfahren zur Herstellung eines Getränkes oder eines festen Lebensmittels, umfassend ein Verfahren nach Anspruch 8.

## Claims

1. Use of a compound of formula I or of a mixture of compounds of formula I: 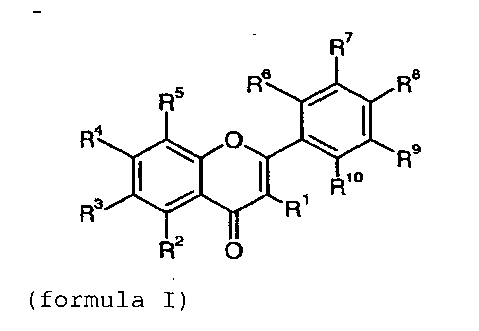 wherein
R¹ to R¹⁰ each independently of the others denotes H, methoxy or ethoxy and
at least one of the radicals R¹ to R¹⁰ denotes methoxy or ethoxy
for enhancing the sensory impression, in particular the taste impression, of alcohol.

2. Use according to claim 1, wherein at least one compound of formula I is selected from the group consisting of compounds of formulae II to VI:

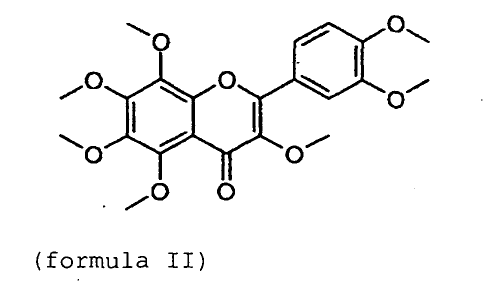

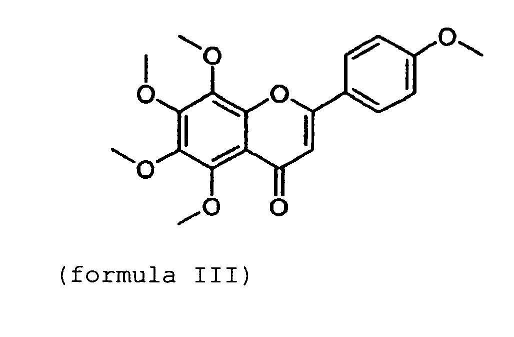

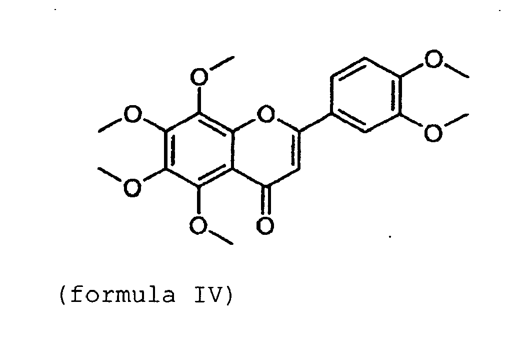

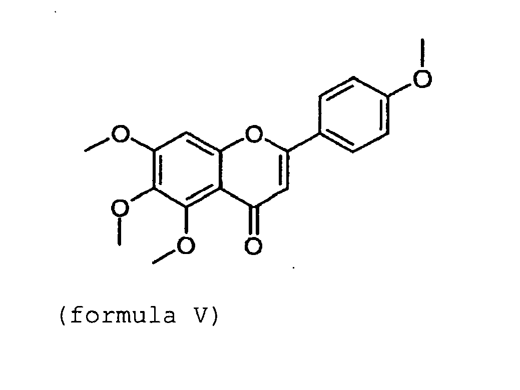

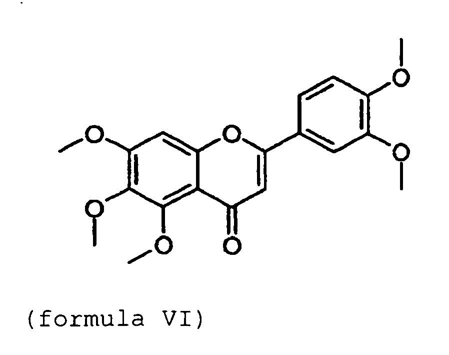

3. Liquid mixture comprising ethanol and a compound of formula I or a mixture of compounds of formula I: 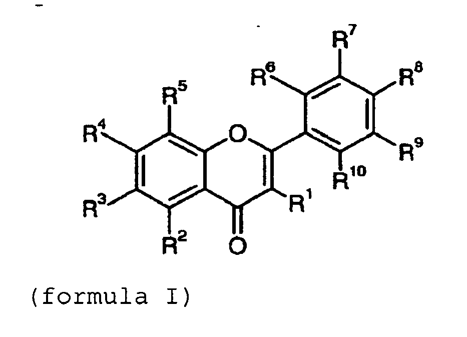 wherein
R¹ to R¹⁰ each independently of the others denotes H, methoxy or ethoxy and
at least one of the radicals R¹ to R¹⁰ denotes methoxy or ethoxy
and wherein
the ethanol content, based on the volume of the liquid mixture, is from 0.1 to 50 vol% and the total amount of compounds of formula I, based on the liquid mixture, is from 1 to 20 ppm,
with the proviso that the mixture does not comprise orange juice.

4. Liquid mixture according to claim 3, wherein the mixture does not comprise juice from citrus fruits.

5. Liquid mixture according to either claim 3 or claim 4, wherein the compounds of formula I are substantially one or more compounds of formulae II to VI

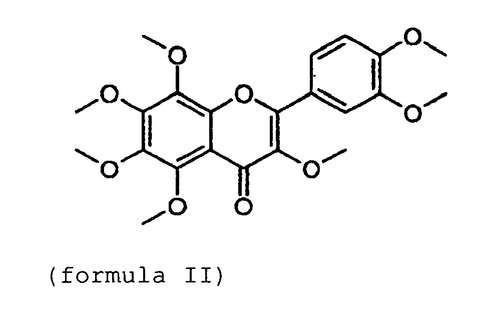

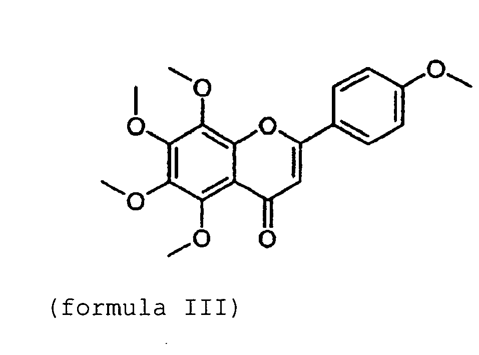

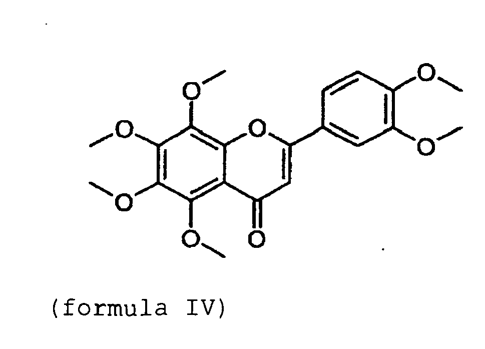

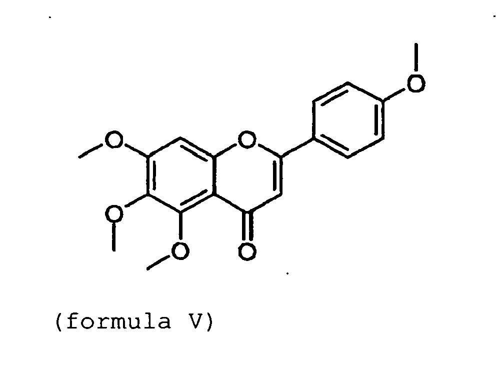

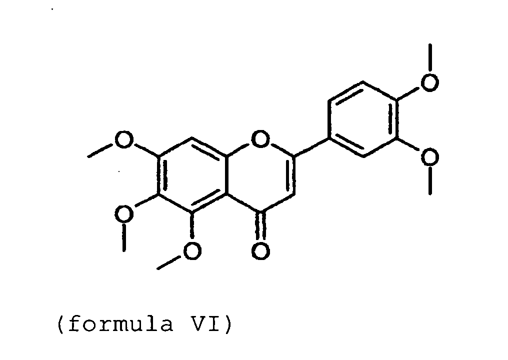

6. Liquid mixture according to any one of claims 3 to 5, wherein the mixture is a drink for consumption by humans.

7. Confectionery comprising a liquid mixture according to any one of claims 3 to 5.

8. Method for producing an enhanced ethanol taste impression, comprising the steps:
a) providing ethanol or a mixture containing ethanol,
b) adding a compound of formula I or a mixture of compounds of formula I in an amount such that the taste impression of ethanol is enhanced,
with the proviso that no orange juice, preferably no juice from citrus fruits, is used in step b).

9. Method for producing a drink or a solid foodstuff, comprising a method according to claim 8.

## Revendications

1. Utilisation d'un composé de la formule I ou d'un mélange de composés de la formule 1 : 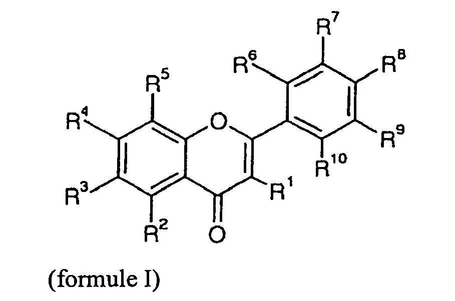 dans laquelle
R¹ à R¹⁰ signifient indépendamment l'un de l'autre un H, un méthoxyle ou un éthoxyle et
au moins un des radicaux R¹ à R¹⁰ signifie un méthoxyle ou un éthoxyle,
au renforcement de l'impression sensorielle, en particulier de l'impression gustative, de l'alcool.

2. Utilisation selon la revendication 1, dans laquelle au moins un composé de la formule I est choisi parmi le groupe consistant en les composés des formules II à VI :

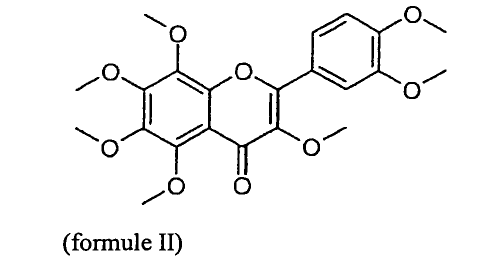

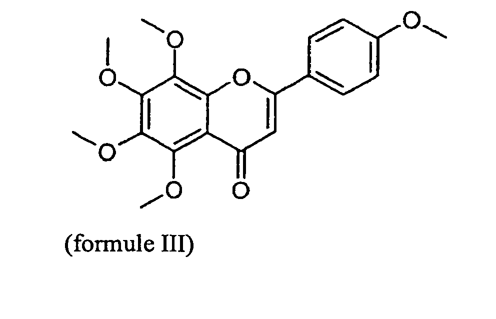

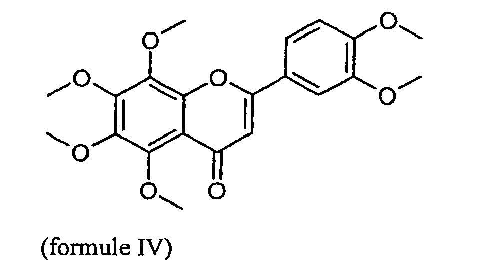

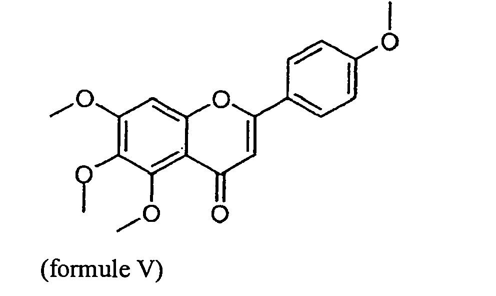

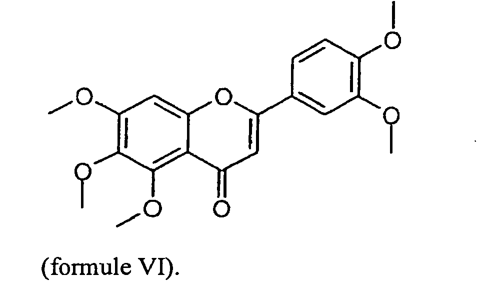

3. Mélange liquide comprenant de l'éthanol et un composé de la formule I ou un mélange de composés de la formule I : 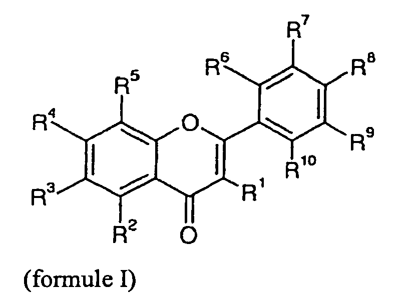 dans laquelle
R¹ à R¹⁰ signifient indépendamment l'un de l'autre un H, un méthoxyle ou un éthoxyle et
au moins un des radicaux R¹ à R¹⁰ signifie un méthoxyle ou un éthoxyle et sachant que
la teneur en éthanol, rapportée au volume du mélange liquide, est de 0,1 à 50 % en volume et que la quantité totale de composés de la formule I, rapportée au mélange liquide, est de 1 à 20 ppm,
avec la condition que le mélange ne comprend pas de jus d'orange.

4. Mélange liquide selon la revendication 3, dans lequel le mélange ne comprend pas de jus d'agrumes.

5. Mélange liquide selon l'une quelconque des revendications 3 ou 4, dans lequel les composés de la formule I sont essentiellement un ou plusieurs des composés des formules II à VI

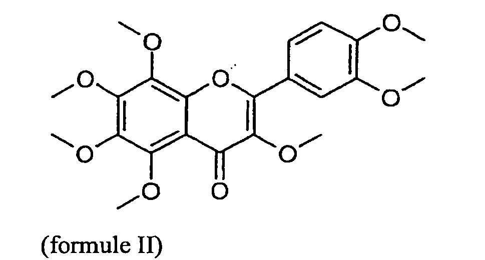

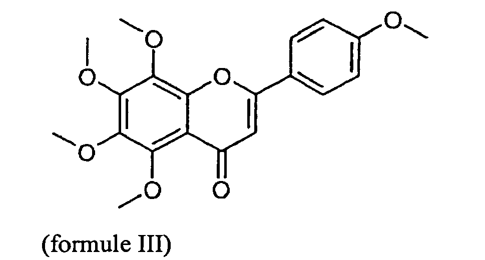

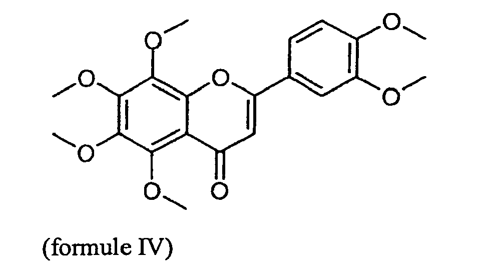

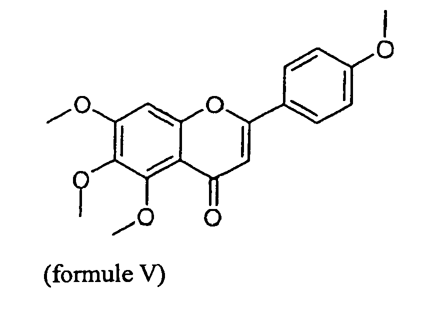

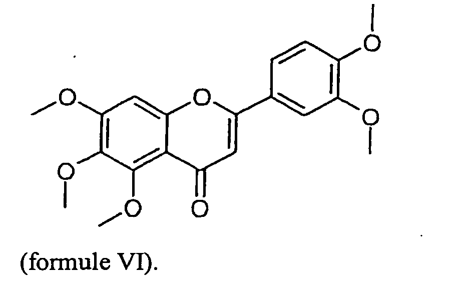

6. Mélange liquide selon l'une quelconque des revendications 3 à 5, dans lequel le mélange est une boisson destinée à la consommation par des humains.

7. Confiserie ou pâtisserie, comprenant un mélange liquide selon l'une quelconque des revendications 3 à 5.

8. Procédé pour produire une impression gustative renforcée de l'éthanol, comprenant les étapes :
a) mise à disposition d'éthanol ou d'un mélange contenant de l'éthanol.
b) addition d'un composé de la formule I ou d'un mélange de composés de la formule I en une quantité telle que l'impression gustative de l'éthanol soit renforcée,
avec la condition que dans l'étape b) ne soit pas utilisé de jus d'orange, de préférence pas de jus d'agrumes.

9. Procédé de préparation d'une boisson ou d'une denrée alimentaire solide comprenant un procédé selon la revendication 8.
